## Europäisches Patentamt

## European Patent Office

## Office européen des brevets

(11) Publication number: **0 036 394**
**B1**

# EUROPEAN PATENT SPECIFICATION

(45) Date of publication of patent specification: 22.05.85

(51) Int. Cl.⁴: **F 02 D 5/02**, G 01 M 15/00

(21) Application number: **81830032.9**

(22) Date of filing: **03.03.81**

(54) **Method and apparatus for calibrating the exhaust emission of an idling internal-combustion engine provided with an electronic injection apparatus.**

(30) Priority: **13.03.80 IT 6738880**

(43) Date of publication of application:
**23.09.81 Bulletin 81/38**

(45) Publication of the grant of the patent:
**22.05.85 Bulletin 85/21**

(84) Designated Contracting States:
**DE FR GB SE**

(56) References cited:
**FR-A-2 284 038**
**FR-A-2 333 125**
**US-A-4 204 505**

(73) Proprietor: **FIAT AUTO S.p.A.**
**Corso Giovanni Agnelli 200**
**I-10135 Torino (IT)**

(72) Inventor: **Martinez, Pasquale**
**Via Rosmini, 5**
**I-10126 Torino (IT)**
Inventor: **Di Nunzio, Vittorio**
**Corso Francia 278**
**I-10146 Torino (IT)**

(74) Representative: **Jacobacci, Filippo et al**
**c/o JACOBACCI-CASETTA & PERANI S.p.A. Via Alfieri 17**
**I-10121 Torino (IT)**

Courier Press, Leamington Spa, England.

## Description

The present invention relates to a method for calibrating the exhaust emission of an idling internal combustion engine provided with an electronic injection apparatus, for the purpose of bringing the carbon monoxide emission of the engine under a predetermined limit without the use of a CO-tester; the said injection apparatus being of the kind comprising an electronic control unit powered by a battery and including circuit means for the closed loop control of the fuel/air mixture strength, a "lambda" sensor responsive to the proportion of carbon monoxide in the exhaust gases located in the exhaust pipe and an integrator operable to generate, in dependence on signals coming from the sensor, a correction signal called "integrator signal", which is representative of the change in the mixture strength required to bring the mixture strength to the stoichiometric value; the method including acting on the air adjustment means of the engine as a function of the integrator output voltage.

An electronic injection apparatus of the above kind is the well-known Bosch L-Jetronic apparatus.

The Bosch L-Jetronic electronic injection apparatus includes an electronic control unit provided with a plurality of interconnection terminals, each of which is indicated by a number. The integrator signal is available at terminal number 22 of this control unit.

When the integrator acts in the sense such as to determine a weakening of the fuel/air mixture, the output voltage of the integrator tends to fall with respect to the value it has when the feedback control ("lambda" probe) is switched out, whilst it tends to rise when the integrator acts in the sense of enrichment of the mixture.

The above method is known from JP—A—54 069 617. In carrying out that method the problem arises that the integrator output voltage varies also as a function of the battery voltage. In other words, the known method is reliable and accurate provided the battery voltage corresponds to the rated voltage.

It is an object of the present invention to provide a method for calibrating the exhaust emission of an idling internal-combustion engine wherein the measurement of the integrator output voltage is made independent of the battery voltage.

To that end the invention provides a method as described, which is characterized in that it comprises the following steps:

a) generating a reference voltage proportional to a predetermined battery voltage value;

b) comparing the reference voltage with the integrator output voltage when the "lambda" sensor is switched out and modifying the reference voltage so as to render it substantially equal to the integrator output voltage, whilst the said control unit is being powered with said predetermined battery voltage and the "lambda" sensor is switched out; and

c) measuring thereafter, whilst the engine operates under idling conditions, the deviation of the integrator output voltage when the "lambda" sensor is switched in with respect to said modified reference voltage; and

d) acting on the idling air adjustment means while the "lambda" sensor is switched in in such a way as to bring the said voltage deviation within predetermined limits.

The invention also relates to an apparatus for carrying out the method specified at the beginning of the present description, i.e. a method for calibrating the exhaust emission of an idling internal combustion engine provided with an electronic injection apparatus, for the purpose of bringing the carbon monoxide emission of the engine under a predetermined limit without the use of a CO-tester; the said injection apparatus being of the kind comprising an electronic control unit powered by a battery and including circuit means for a closed loop control of the fuel/air mixture strength, a "lambda" sensor responsive to the proportion of carbon monoxide in the exhaust gases located in the exhaust pipe, and an integrator operable to generate, in dependence on signals coming from the "lambda" sensor, a correction signal, called "integrator signal", which is representative of the change in the mixture strength required to bring the mixture strength to the stoichiometric value; the apparatus comprising means for measuring the deviation of the integrator output voltage when the said sensor is switched in with respect to the voltage assumed by said integrator output voltage when the sensor is switched out.

A similar apparatus is known from JP—A—54 069 617 too. This known apparatus cannot however take into account the effects of a change of the battery voltage.

A further object of the invention is to provide a more accurate and reliable apparatus, by means of which the measurement of the integrator output voltage and the calibration of the exhaust emission are made independent of the battery voltage.

To that end the present invention provides an apparatus as described, characterized in that it further comprises:

a potentiometer having the resistive element connected between the battery and ground, and the wiper connected by means of a resistor to a first input of an operational amplifier having a second input to which a signal proportional to the integrator output signal is applied in use; and visual display means connected to the output of the said amplifier for providing a visual display of the amplifier output signal.

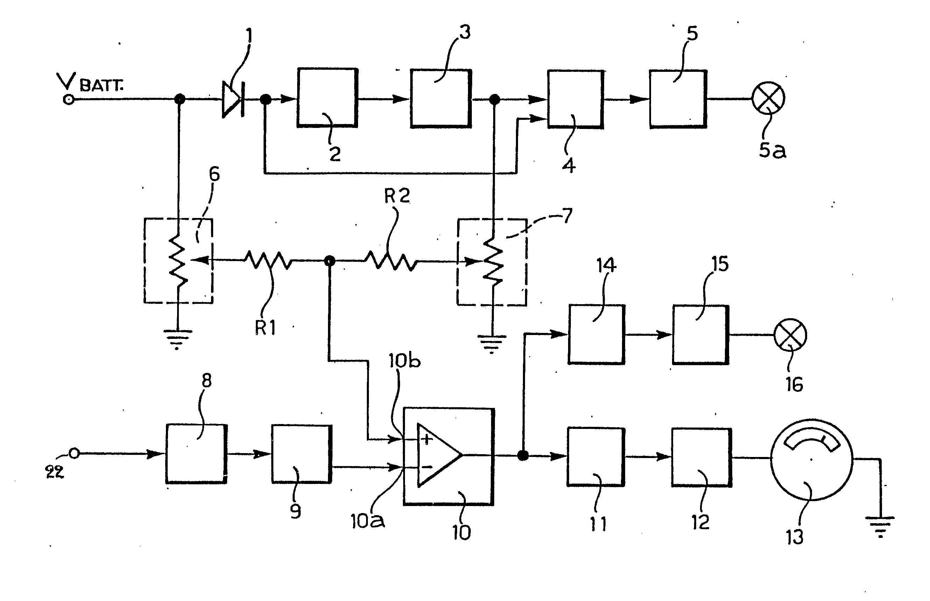

The invention will now be described in detail by making reference to the attached drawing, provided by way of non-limitative example, which shows a block schematic diagram of a circuit for performing the method according to the invention.

In the drawing, the battery voltage $V_{BATT}$ is supplied to a polarity reversal protection diode 1, connected with a block 2 for filtering and overvoltage protection.

The block 2 is connected with a stabiliser circuit 3, which generates a constant voltage for the integrated circuits and the reference thresholds.

The diode 1 and the stabiliser circuit 3 are connected to a threshold circuit 4 which trips when the battery voltage exceeds a predetermined value (in the present case $12 V \pm 0.6 V$).

The threshold circuit 4 is connected to an amplifier circuit 5 connected to a warning lamp 5a the illumination of which indicates that the battery voltage is greater than or equal to 12V.

The battery voltage is taken to a potentiometer circuit 6 the slider of which is connected, by means of resistors $R_1$, $R_2$ of equal resistance, to the slider of a potentiometer circuit 7 connected to the output of the stabiliser circuit 3.

The integrator signal is taken to the input of a filter 8 connected to an amplifier 9, the output of which is connected to a first input 10a of an operational amplifier 10. The filter 8 eliminates high frequency disturbances from the integrator signal. The second input 10b of the latter is connected to the common terminal of the resistors $R_1$ and $R_2$.

The operational amplifier 10 is connected to a filter circuit 11 which is connected to a potentiometer 12 connected, in turn, to an indicator instrument 13 constituted, for example, by a moving coil voltmeter.

The output of the operational amplifier 10 is connected to the input of a differentiator circuit 14, the output of which is connected to an amplifier 15 connected, in turn, to an optical indicator 16, constituted, for example, by a lamp.

In operation, the output signal from the operational amplifier 10 is constituted by a voltage signal proportional to the battery voltage (coming from the potentiometer 6 by means of the resistor $R_1$), to which is added a constant voltage signal (coming from the stabiliser circuit 3 by means of the potentiometer 7 and the resistor $R_2$), and from which is subtracted a voltage signal proportional to the voltage of the integrator signal at the input of the filter circuit 8.

The output signal from the operational amplifier 10, as has been indicated above, is supplied to the indicator instrument 13 through the filter 11 and the potentiometer 12.

The device according to the present invention illustrated in the drawing requires, before use, a preliminary calibration which will now be described.

It is convenient, for example, for the central value of the scale of the voltmeter 13 to correspond to the output voltage value from the integrator when the "lambda" probe is switched out. This voltage value will, in the following description, be indicated with $V_{mid}$, and, as is indicated above, this is equal to the voltage which the integrator signal assumes with the "lambda" probe switched in, when the air/fuel mixture strength is equal to the stoichiometric ratio.

The applicant has established that the voltage $V_{mid}$, with the "lambda" probe disconnected, varies in proportion to the battery voltage. In other words, to each value of the battery voltage there is associated a corresponding value $V_{mid}$, and this value $V_{mid}$ is detectable by means of simple measurements.

So that the measurement effected with the instrument illustrated in the drawing will be reliable, it is necessary to calibrate this instrument in such a way that the value $V_{mid}$ is independent of the value of the battery voltage. For this purpose, during calibration, the instrument is supplied with a certain battery voltage value and is provided at the input 10a of the operational amplifier 10 with a voltage the value of which is equal to the value $V_{mid}$ corresponding to this battery voltage, the said value having been previously measured. The operation now described corresponds to a simulation in the calibration phase of the condition with the "lambda" probe disconnected. In this condition the voltage of the output signal from the operational amplifier 10 must be independent of the battery voltage. Because of this, it is necessary that the output voltage from the amplifier 9 be equal to that of the signal coming from the potentiometer 6 through the resistor $R_1$ whatever the battery voltage. This condition can be obtained by acting on the potentiometer 6.

The positioning of the needle of the voltmeter 13 to the centre of the scale is therefore obtainable by acting on the potentiometer 6.

Once the calibration of the instrument has been effected the potentiometer 6 allows the needle of the voltmeter 13 to be taken back to the centre position of the scale in use, allowing possible deviations of the open loop value of the integrator voltage with respect to the nominal value, due to calibration and manufacturing tolerances of the central control box, to be compensated.

In consequence of what has been described above, in use, the needle of the voltmeter 13 will become displaced to the right or to the left with respect to its centre of the scale position upon variation of the output signal from the operational amplifier 10, according to whether the fuel/air mixture is rich or lean.

The needle of the voltmeter 13 will be at the centre of the scale when the strength of the fuel/air mixture is equal to the stoichiometric ratio.

The potentiometer 12 allows the excursions of the output signal from the filter 11 to be adapted to the width of the scale of the indicator instrument 13.

It is possible to mark on the scale of the indicator instrument 13 a range of "acceptability" corresponding to the range of percentage values of emission of CO (for example in the range lying between 0.5% and 0.9%) allowed according to particular anti-pollution laws.

This range of "acceptability" can be defined once and for all on the basis of direct measurements of CO in relation to the deviations of the voltage which the integrator signal undergoes upon variation of the emission of CO, with respect to the condition with the "lambda" probe switched out. The output of the operational amplifier 10 feeds, moreover, a signal to the differentiation circuit 14 which provides a sequence of impulses at the same frequency as the signals provided from the "lambda" probe; these impulses, amplified by the amplifier 15, are then passed to the indicator 16 which, by means of a flashing optical signal, provides the indication that the system is in adjustment.

In use, when the instrument illustrated in the drawing is used for the indirect control of the emission of CO from a motor operating in idling conditions, the following procedure is followed (obviously after having warmed up the engine and after having adjusted its speed to the slowest running setting):

a) the "lambda" probe is switched out;

b) by means of the illuminated indicator 5a it is verified if the battery voltage is greater than the preestablished threshold;

c) the needle of the indicator instrument 13 is positioned to the centre of the scale by acting on the potentiometer 6;

d) the "lambda" probe is switched in;

e) it is checked to see if the index of the indicator instrument 13 is located in the above-defined range of "acceptability";

f) if the index of the indicator instrument 13 is located outside the field of "acceptability", the idling air adjustment screw is turned until the needle of the indicator instrument 13 is carried into the range of "acceptability".

## Claims

1. A method for calibrating the exhaust emission of an idling internal combustion engine provided with an electronic injection apparatus, for the purpose of bringing the carbon monoxide emission of the engine under a predetermined limit without the use of a CO-tester; the said injection apparatus being of the kind comprising an electronic control unit powered by a battery and including circuit means for the closed loop control of the fuel/air mixture strength, a "lambda" sensor responsive to the proportion of carbon monoxide in the exhaust gases located in the exhaust pipe and an integrator operable to generate, in dependence on signals coming from the sensor, a correction signal called "integrator signal", which is representative of the change in the mixture strength required to bring the mixture strength to the stoichiometric value; the method including acting on the air adjustment means of the engine as a function of the integrator output voltage, characterised in that it comprises the following steps:

a) generating a reference voltage proportional to a predetermined battery voltage value;

b) comparing the reference voltage with the integrator output voltage when the "lambda" sensor is switched out and modifying the reference voltage so as to render it substantially equal to the integrator output voltage, whilst the said control unit is being powered with said predetermined battery voltage and the "lambda" sensor is switched out; and

c) measuring thereafter, whilst the engine operates under idling conditions, the deviation of the integrator output voltage when the "lambda" sensor is switched in with respect to said modified reference voltage; and

d) acting on the idling air adjustment means while the "lambda" sensor is switched in in such a way as to bring the said voltage deviation within predetermined limits.

2. An apparatus for carrying out a method according to Claim 1, i.e. for calibrating the exhaust emission of an idling internal combustion engine provided with an electronic injection apparatus, for the purpose of bringing the carbon monoxide emission of the engine under a predetermined limit without the use of a CO-tester; the said injection apparatus being of the kind comprising an electronic control unit powered by a battery and including circuit means for a closed loop control of the fuel/air mixture strength, a "lambda" sensor responsive to the proportion of carbon monoxide in the exhaust gases located in the exhaust pipe, and an integrator operable to generate, in dependence on signals coming from the "lambda" sensor, a correction signal, called "integrator signal", which is representative of the change in the mixture strength required to bring the mixture strength to the stoichiometric value; the apparatus comprising means for measuring the deviation of the integrator output voltage when the said sensor is switched in with respect to the voltage assumed by said integrator output voltage when the sensor is switched out; characterised in that it further comprises:

a potentiometer (6) having the resistive element connected between the battery and ground, and the wiper connected by means of a resistor (R1) to a first input (10b) of an operational amplifier (10) having a second input (10a) to which a signal proportional to the integrator output signal is applied in use; and visual display means (13) connected to the output of the said amplifier (10) for providing a visual display of the amplifier output signal.

3. An apparatus according to Claim 2, characterised in that it further comprises a voltage stabilizer (3) connected to the battery; a second potentiometer (7), the resistive element of which is connected between the output of the voltage stabilizer (3) and ground and the wiper of which is connected to the first input (10b) of the said amplifier.

4. An apparatus according to Claims 2 or 3, characterised in that it further comprises means (3, 4, 5, 5a) for checking the battery voltage.

5. An apparatus according to Claim 4, characterised in that it includes means (10, 14, 15, 16) for checking the operation of the said "lambda" sensor.

6. An apparatus according to Claim 5, characterised in that the said visual display means include a moving coil voltmeter (13).

7. An apparatus according to Claim 5, characterised in that it includes a differentiation circuit (14) having an input connected to the output of said operational amplifier (10), and having its output connected to the input of a further amplifier (15) the output of which controls the operation of a warning lamp (16).

8. An apparatus according to Claims 2 or 3, characterised in that it further includes a filter (8) for eliminating high frequency disturbances from the integrator output signal.

**Revendications**

1. Procédé d'étalonnage de l'émission des gaz d'échappement d'un moteur à combustion interne tournant au ralenti avec un appareil d'injection électronique, dans le but d'amener l'émission d'oxyde de carbone du moteur au-dessous d'une limite prédéterminée sans utiliser de contrôleur de CO, ledit appareil d'injection étant du type équipé d'un bloc de commande électronique alimenté par une batterie et d'un circuit pour la commande en circuit fermée de la force du mélange d'air et de combustible, une sonde "lambda" répondant à la proportion d'oxyde de carbone dans les gaz d'échappement se trouvant dans le tuyau d'échappement, et un intégrateur qui peut produire, en réponse à des signaux provenant de la sonde, un signal de correction appelé "signal intégrateur" qui est représentatif de la variation de la force du mélange exigée pour amener la force du mélange à la valeur stoïchiométrique, le procédé comprenant l'action sur le moyen de réglage de l'air du moteur en fonction de la tension de sortie de l'intégrateur, caractérisé en ce qu'il comprend les opérations suivantes:

a) production d'une tension de référence proportionnelle à une valeur prédéterminée de la tension de la batterie;

b) comparaison de la tension de référence à la tension de sortie d'intégrateur lorsque la sonde "lambda" est mise hors circuit et modification de la tension de référence de façon à la rendre sensiblement égale à la tension de sortie d'intégrateur, tandis que ledit bloc de commande est alimenté par ladite tension prédéterminée de la batterie et que la sonde "lambda" est mise hors circuit, et

c) mesure ultérieure, tandis que le moteur tourne au ralenti, de l'écart de la tension de sortie d'intégrateur, lorsque la sonde "lambda" est mise en circuit, par rapport à ladite tension de référence modifiée, et

d) action sur le moyen de réglage d'air au ralenti alors que la sonde "lambda" est mise en circuit, de façon à amener ledit écart de tension dans les limites prédéterminées.

2. Appareil pour mettre en oeuvre le procédé conforme à la revendication 1, c'est-à-dire pour étalonner l'émission des gaz d'échappement d'un moteur à combustion interne tournant au ralenti équipé d'un appareil d'injection électronique, dans le but d'amener l'émission d'oxyde de carbone du moteur au-dessous d'une limite prédéterminée sans utiliser de contrôleur de CO, ledit appareil d'injection électronique étant du type à bloc de commande électronique alimenté par une batterie et comprenant un moyen de commande pour une commande en circuit fermé de la force du mélange air-combustible, une sonde "lambda" réagissant à la proportion d'oxyde de carbone dans les gaz d'échappement se trouvant dans le tuyau d'échappement, et un intégrateur pouvant produire en fonction de signaux provenant de la sonde "lambda", un signal de correction appelé "signal intégrateur", qui est représentatif de la variation de force du mélange exigée pour amener la puissance du mélange à la valeur stoïchiométrique, l'appareil comprenant un moyen pour mesurer l'écart de la tension de sortie d'intégrateur, lorsque ladite sonde est mise en circuit, par rapport à la valeur prise par ladite tension de sortie d'intégrateur lorsque la sonde est mise hors circuit; et caractérisé par le fait qu'il comprend en outre: un potentiomètre (6) dont l'élément résistif est connecté entre la batterie et la masse; et dont le curseur est connecté au moyen d'une résistance (R1) à une première entrée (10b) d'un amplificateur opérationnel (10) qui a une seconde entrée (10a) à laquelle est appliqué en service un signal proportionnel au signal de sortie d'intégrateur; et un moyen de visualisation (13) connecté à la sortie dudit amplificateur (10) pour fournir un affichage visuel du signal de sortie de l'amplificateur.

3. Appareil conforme à la revendication 2, caractérisé par le fait qu'il comprend en outre un stabilisateur de tension (3) connecté à la batterie, un second potentiomètre (7) dont l'élément résistif est connecté entre la sortie du stabilisateur de tension (3) et la masse et dont le curseur est connecté à la première entrée (10b) dudit amplificateur.

4. Appareil conforme aux revendications 2 ou 3, caractérisé par le fait qu'il comprend en outre des moyens (3, 4, 5, 5a) pour vérifier la tension de la batterie.

5. Appareil conforme à la revendication 4, caractérisé par le fait qu'il comprend des moyens (10, 14, 15, 16) pour vérifier le fonctionnement de ladite sonde "lambda".

6. Appareil conforme à la revendication 5, caractérisé par le fait que ledit moyen d'affichage visuel comporte un voltmètre à cadre mobile (13).

7. Appareil conforme à la revendication 5, caractérisé par le fait qu'il comporte un circuit de différentiation (14) dont une entrée est connectée à la sortie dudit amplificateur opérationnel (10) et dont la sortie est connectée à l'entrée d'un autre amplificateur (15) dont la sortie commande le fonctionnement d'une lampe témoin (16).

8. Appareil conforme aux revendications 2 ou 3, caractérisé par le fait qu'il comprend en outre un filtre (8) pour éliminer les perturbations haute fréquence provenant du signal de sortie d'intégrateur.

## Patentansprüche

1. Verfahren zum Calibrieren der Abgasemission einer leerlaufenden Brennkraftmaschine, die mit einer elektronischen Einspritzanlage ausgestattet ist, zwecks Senkung der CO-Emission des Motors unter einen vorgegebenen Grenzwert ohne Verwendung eines CO-Prüfgeräts, wobei die Einspritzanlage eine von einer Batterie betriebene elektronische Überwachungseinrichtung und eine Schaltung mit geschlossenem Regelkreis zur Regelung der Zusammensetzung des Kraftstoff-Luft-Gemischs aufweist, ferner eine auf den Kohlenmonoxidgehalt in den Auspuffgasen ansprechende Lambda-Sonde in der Auspuffleitung und einen Integrator, der in Abhängigkeit von den von der Sonde abgegebenen Signalen ein als Integratorsignal bezeichnetes Korrektursignal liefert, das ein Maß für die notwendige Änderung der Gemischzusammensetzung auf den stöchiometrischen Wert ist und wobei die Luftverstelleinrichtung des Motors in Abhängigkeit von der Ausgangsspannung des Integrators betätigt wird, gekennzeichnet durch folgende Schritte:

a) Erzeugen einer einem vorbestimmten Wert der Batteriespannung proportionalen Bezugsspannung,

b) Vergleichen der Bezugsspannung mit der Ausgangsspannung des Integrators bei abgeschalteter Lambda-Sonde und Verändern der Bezugsspannung, bis sie praktisch gleich der Integratorausgangsspannung ist, während die Regeleinrichtung mit der vorbestimmten Batteriespannung gespeist wird und die Lambda-Sonde abgeschaltet ist,

c) anschließend bei im Leerlauf arbeitendem Motor Messen der Abweichung der Integratorausgangsspannung bei eingeschalteter Lambda-Sonde gegenüber der modifizierten Bezugsspannung und

d) Betätigen der Leerlaufluftverstelleinrichtung bei eingeschalteter Lambda-Sonde in der Weise, daß die Spannungsabweichung innerhalb vorbestimmter Grenzen gehalten wird.

2. Vorrichtung zum Ausüben eines Verfahrens nach Anspruch 1, d.h. zum Calibrieren der Abgasemission einer leerlaufenden Brennkraftmaschine, die mit einer elektronischen Einspritzanlage ausgestattet ist, zwecks Senkung der CO-Emission des Motors unter einen vorgegebenen Grenzwert ohne Verwendung eines CO-Prüfgeräts, wobei die Einspritzanlage eine von einer Batterie betriebene elektronische Steuereinrichtung und eine Schaltung zur Regelung der Zusammensetzung des Kraftstoff-Luft-Gemischs aufweist, ferner eine auf den Kohlenmonoxidgehalt in den Auspuffgasen ansprechende Lambda-Sonde in der Auspuffleitung und einen Integrator, der in Abhängigkeit von den von der Lambda-Sonde abgegebenen Signalen ein als Integratorsignal bezeichnetes Korrektursignal liefert, das ein Maß für die notwendige Änderung der Gemischzusammensetzung auf den stöchiometrischen Wert zu ist und wobei das Gerät eine Einrichtung zum Messen der Abweichung der Integratorausgangsspannung bei eingeschalteter Sonde gegenüber der Spannung bei abgeschalteter Sonde aufweist, dadurch gekennzeichnet, daß ferner vorgesehen ist:

eine Potentiometer (6), dessen Widerstandselement zwischen Batterie und Erde geschaltet ist und bei dem der Kontaktarm über einen Widerstand (R1) an einen ersten Eingang (10b) eines Rechenverstärkers (10) geführt ist, der einen zweiten Eingang (10a) besitzt, dem im Betrieb ein dem Integratorausgangssignal proportionales Signal zugeführt wird, und eine Anzeigeeinrichtung (13), die am Ausgang des Verstärkers (10) liegt und eine sichtbare Anzeige des Verstärkerausgangssignals liefert.

3. Vorrichtung nach Anspruch 2, dadurch gekennzeichnet, daß außerdem ein mit der Batterie verbundener Spannungsstabilisator (3) vorgesehen ist, ferner ein zweites Potentiometer (7), dessen Widerstandselement zwischen dem Ausgang des Spannungsstabilisators (3) und Erde liegt und dessen Kontaktarm mit dem ersten Ausgang (10b) des Verstärkers verbunden ist.

4. Vorrichtung nach Anspruch 2 oder 3, dadurch gekennzeichnet, daß ferner Einrichtungen (3, 4, 5, 5a) zum Prüfen der Batteriespannung vorgesehen sind.

5. Vorrichtung nach Anspruch 4, dadurch gekennzeichnet, daß eine Einrichtung (10, 14, 15, 16) zum Prüfen der Arbeitsweise der Lambda-Sonde vorgesehen ist.

6. Vorrichtung nach Anspruch 5, dadurch gekennzeichnet, daß die Einrichtung zur sichtbaren Anzeige als Drehspulvoltmeter (13) ausgebildet ist.

7. Vorrichtung nach Anspruch 5, dadurch gekennzeichnet, daß eine Differentiationsschaltung (14) vorgesehen ist, deren Eingang mit dem Ausgang des Rechenverstärkers (10) verbunden ist und deren Ausgang mit dem Eingang eines weiteren Verstärkers (15) verbunden ist, dessen Ausgang den Betrieb einer Kontrollampe (16) steuert.

8. Vorrichtung nach Anspruch 2 oder 3, dadurch gekennzeichnet, daß ferner ein Filter (8) zum Unterdrücken von Hochfrequenzströrungen des Integratorausgangssignals vorgesehen ist.

0 036 394